# EUROPÄISCHE PATENTANMELDUNG

(11) **EP 1 355 396 A1**
(43) Veröffentlichungstag der Anmeldung: **22.10.2003**
(21) Anmeldenummer: 03008633.4
(22) Anmeldetag: 15.04.2003
(51) Int. Cl.: H02G 3/04

(54) **Scheuerschutz für, in Wellenrohre verlegte, Elektrokabel**

(30) Priorität: 18.04.2002 IT BZ20020021
(71) Anmelder: INTERCABLE SRL, I-39031 Brunico (Bolzano) (IT)
(72) Erfinder: Mutschlechner, Klaus, 39031 Stegona/Brunico (Bolzano) (IT)
(74) Vertreter: Oberosler, Ludwig

(57) **Zusammenfassung**

Scheuerschutz für, in Wellenrohre mit Längsschlitz (1a) verlegte, Kabel (3) wobei zwischen den Innenflächen des Wellenrohres (1) und den Kabeln (3) welche nachträglich durch den Längsschlitz (1a) in das Wellenrohr (1) eingesetzt werden, eine innere Auskleidungsschicht (2) eingelegt ist welche sich an die inneren Ringflächen (1c) des Wellenrohres anschmiegt, wobei die Längsränder dieser inneren Auskleidungsschicht (2) dem Längsschlitz (1a) des Wellenrohres entsprechend verlaufen und wobei das gleichmäßige Anliegen der inneren Auskleidungsschicht (2) an den inneren Ringflächen (1c) des Wellenrohres durch die Elastizität der Auskleidungsschicht (2) infolge seiner Biegung gemäß der Längsachse (1x) des Wellenrohres (1) und/oder durch mindestens einem Klebebereich (2f), gesichert ist.

## Beschreibung

Die Erfindung bezieht sich auf einen Scheuerschutz für Elektrokabel welche innerhalb von Wellenrohren für die Elektroinstallation an Fahrzeugen verwendet werden. Es ist der Einsatz von Wellenrohren aus Kunststoff als Schutz für einzelne oder gebündelte Elektrokabel, welche die Verkabelung der elektrischen Anlage von Fahrzeugen bilden, bekannt; diese Wellenrohre sind mit einem Längsschlitz versehen durch welchen die Kabel in das Wellenrohr eingeführt werden. Insbesondere durch den hohen Einspritzdruck an, durch Kompression zündenden, Verbrennungsmotoren (Diesel) ergeben sich Vibrationen beachtlicher Intensität und unterschiedlicher Frequenzen welche unter anderem auch an die, innerhalb der Wellenrohre verlaufenden, Elektrokabel übertragen werden. Hauptsächlich, je nach dem Verlauf der Kabel innerhalb des Wellenrohres und in Abhängigkeit des Werkstoffes der isolierenden Ummantelung der Kabel, treten diese durch Induktion der Motorschwingungen oder/und der Schwingungen des vom Motor erzeugten Schalls in Resonanzschwingung wobei eine Relativbewegung zwischen der Innenoberfläche des Wellenrohres und der Außenoberfläche der Kabelummantelung zustande kommt. Diese Relativbewegung verursacht ein Scheuern der Kabelummantelung an den inneren Ringflächen und Ringkanten des Wellenrohres wodurch die progressive Abreibung der isolierenden Ummantelung des Kabels stattfindet bis Bereiche entstehen wo der Leiter frei von der Ummantelung ist und somit der Korrosion, dem Eindringen von Flüssigkeiten unter die Ummantelung und dem Zustandekommen eines Kurzschlusses durch Kontakt mit den ummantelungsfreien Stellen anderer anliegend verlegter Kabel, ausgesetzt sind.

Dieser Vorgang ist bekannt und es gibt Schutzmaßnahmen welche auf die Umwicklung der Kabelbündel mittels Bänder unterschiedlicher Werkstoffe, auf das Anbringen eines strumpfartigen Gewebes oder das Anbringen von Ringen oder Haltebändern welche zueinander beabstandet längs der Kabelbündel angebracht sind, basieren und vor dem Einsetzen der Kabel in das Wellenrohr durchgeführt werden. All diese bekannten Schutzsysteme erschweren die Arbeitsgänge für die Installation und einige von diesen vermögen es nicht das Scheuern vollständig zu unterbinden.

Es ist weiters ein System für die Schalldämmung an Kabeln von Fahrzeugen bekannt, insbesondere in der EP 0 556 140 und in der EP 0 886 902 ist ein System beschrieben welches die äußere Verkleidung des Wellenrohres mit einem Band aus schalldämmendem Werkstoff vorsieht; es ist vorgesehen, dass die Längsränder dieses Bandes durch den Längsschlitz des Rillenrohres ins Rohrinnere eingeführt werden so dass diese sich mindestens teilweise zwischen der Innenfläche des Rohres und den Kabeln erstrecken um so den Lärm, welcher durch die Vibration der Kabel gegen die Innenfläche des Rillenrohres entsteht, zu dämmen. Dieses System hat vorrangig die Aufgabe die Vibrationen der Wellenrohre gegenüber den Oberflächen des Fahrzeuges und auch die Vibrationen der Kabel gegen die Innenflächen des Wellenrohres, durch den Einsatz von, an der Außenfläche des Wellenrohres aufgeklebten Filzbändern, zu dämmen. Der Filz besitzt eine gute schalldämmende Wirkung aber seine Anwendung ist auf den Fahrerraum begrenzt da er in Bereichen wo Feuchtigkeit, Wasserspritzer oder wo Kraftstoff- und/oder Ölverluste auftreten, nicht geeignet ist weil all diese Flüssigkeiten vom Filz aufgesaugt und zurückgehalten werden und somit im ersten Fall die Isolierung zwischen den Kabeln in Frage stellen und im zweiten Fall die Brandgefahr erhöhen.

Die Erfindung stellt sich die Aufgabe einen wirkungsvollen Schutz gegen das Scheuern an der Innenwand der innerhalb eines Wellenrohres verlegten Kabel durch Zwischenlage einer Schicht von nicht saugfähigem Werkstoff zu schaffen, wobei das Einsetzen der Kabel erleichtert und der Verschluss des Längsschlitzes des Wellenrohres ermöglicht werden soll, bzw. dieser Schlitz durch einen der, aus dem Schlitz hervorstehenden, Längsränder der Innenschicht überdeckt werden kann.

Zur Lösung dieser Aufgabe schlägt die Erfindung die Auskleidung der gesamten Innenfläche mit einer Schicht aus elastischem Werkstoff vor, welche das Scheuern der Kabel direkt an den relativ harten Innenkanten und/oder Innenflächen des Wellenrohres verhindert oder mit einer, mit elastischen, gegen die Kabel ausgerichteten, Vorsprüngen besetzten Schicht vor, wobei diese Vorsprünge geeignet sind das Scheuern der Kabel zu vermeiden oder die Bewegung dieser bezüglich dem Wellenrohr zu dämpfen, oder mit einer Schicht aus elastischem Werkstoff vor welche dem Wellenrohr gegenüber mittels elastischer Stege, Lamellen, Vorsprünge oder Borsten anliegt welche bezwecken, dass die innere Auskleidungsschicht nicht direkt mit der Innenfläche des Wellenrohres in Berührung steht.

Erfindungsgemäß kann diese innere Auskleidungsschicht innen im Wellenrohr gegen ein Verschieben in Längsrichtung durch einen oder durch mehrere Klebebereiche, welche sich vorzugsweise in Längsrichtung parallel zur Längsachse des Wellenrohres, z.B. an den am Längsschlitz anschließenden Bereichen, erstrecken oder durch Vorsprünge unterschiedlicher Form welche so angeordnet sind, dass sie radial in die ringförmigen inneren Rillen des Wellenrohres eingreifen, gesichert werden, wobei die Auskleidungsschicht quer zur Längserstreckung derart elastisch ist, dass diese sich in Eingesetzter Position an die gesamte Innenfläche des Wellenrohres anschmiegt. Erfindungsgemäß können, um ein Zurückhalten der Auskleidungsschicht zu fördern, auch Borsten oder Lamellen an der gesamten, der Innenfläche des Wellenrohres zugewandten Seite, vorgesehen sein; in diesem Fall werden die Borsten oder Lamellen, im Bereich der nach innen vorstehenden Ringe des Wellenrohres verbogen oder seitlich abgelenkt während jene im Bereich der ringförmigen inneren Rillen radial in diese eindringen und so einem Ausziehen der Auskleidungsschicht in Längsrichtung entgegenwirken.

Gemäß einer weiteren erfindungsgemäßen Variante wird das Entgegenwirken gegen ein Ausziehen der inneren Auskleidungsschicht dadurch erreicht, dass diese in Querrichtung weniger ausgeprägt gewellt ist als das Wellenrohr aber mit der selben oder mit einer mehrfachen Teilung; als Alternative kann diese Wellung auch durch eine Reihe von Ausbuchtungen ersetzt werden welche gemäß einer einfachen oder mehrfachen den Innenrillen des Wellenrohrs entsprechenden Teilung, angeordnet sind.

Was die Längsränder der inneren Auskleidungsschicht betrifft, können diese erfindungsgemäß, dem Längsschlitz des Wellenrohres entsprechend positioniert sein, oder es können ein oder auch beide Ränder in Längssaume ausgeformt sein welche sich, durch den Längsschlitz des Wellenrohres hindurch, nach außen erstrecken, weiters können ein oder auch beide Saume das Wellenrohr teilweise oder vollständig umschließen indem sie außen an diesem oder gegenseitig verklebt sind.

Erfindungsgemäß kann die innere Auskleidungsschicht, welche sich zwischen den Kabeln und der Innenfläche des Wellenrohres erstreckt, die kompakte, die aufgeschäumte, die perforierte, die gitterartige oder die textile Struktur eines Laminates aufweisen; im Falle des Einsatzes in Bereichen (Führerkabine) welche nicht dem Verlust oder den Spritzern von Wasser, Treibstoff oder Schmiermittel ausgesetzt sind ist auch der Einsatz von Filz denkbar. Insbesondere im Fall einer textilen oder filzartigen Struktur ist es vorteilhaft wenn im Gewebe, bzw. im Filz, oder außen an diesen Drähte oder elastische Streifen quer zur Längserstreckung der inneren Auskleidungsschicht, zueinander um eine einfache oder mehrfache Teilung entsprechend jener der Innenrillen des Wellenrohres beabstandet, vorgesehen sind um der Schicht die nötige Elastizität zu verleihen damit ein gleichmäßiges Anschmiegen der Auskleidungsschicht an die Innenfläche des Wellenrohres erreicht wird.

Die Erfindung wird anschließend anhand einiger, in den beigelegten Zeichnungen schematisch dargestellter, vorzuziehender Ausführungsbeispiele eines erfindungsgemäßen Scheuerschutzes für, in Wellenrohre verlegte, Kabel näher erklärt; dabei erfüllen die Zeichnungen ausschließlich erklärenden und nicht begrenzenden Zweck.

Die Fig. 1 zeigt in perspektivischer Darstellung das Ende eines, einen Längsschlitz aufweisenden, Wellenrohres welches mit einer erfindungsgemäßen inneren Auskleidungsschicht versehen ist deren Längsränder dem Längsschlitz des Rillenrohres entsprechend verlaufen und innerhalb welcher, mit isolierender Ummantelung versehene, Elektrokabel eingesetzt sind.

Die Fig. 1a zeigt eine Frontalansicht eines Wellenrohres mit Längsschnitt und mit innerer erfindungsgemäßer Auskleidungsschicht mit Längssaumen welche aus dem Längsschlitz nach außen vorstehen und von denen einer einen selbstklebenden Bereich aufweist.

Die Fig. 1b zeigt das selbe in Fig. 1a dargestellte Wellenrohr mit innerer erfindungsgemäßer Auskleidungsschicht während des Einlegens der Elektrokabel. Die Fig. 1c das selbe in den Fig. 1a und 1b dargestellte Wellenrohr mit innerer erfindungsgemäßer Auskleidungsschicht mit dem breiteren, mit Selbstklebebereich versehenen, Längssaum welcher den zweiten schmäleren Saum überdeckt und außen am Rillenrohr verklebt ist.

Die Fig. 1d zeigt das selbe in den Fig. 1a, 1b und 1c dargestellte Wellenrohr mit innerer erfindungsgemäßer Auskleidungsschicht welche einen schmäleren und einen breiteren Längssaum aufweist, wobei letzterer außen das gesamte Wellenrohr abdeckt und mit seinem äußersten Rand auf sich selbst verklebt ist. Die Fig. 1e zeigt in Frontalansicht einen Sektor eines Wellenrohres mit erfindungsgemäßer innerer Auskleidungsschicht welche fingerartige, radial in die inneren ringförmigen Rillen abstehende, Vorsprünge aufweist wobei deren Länge größer ist als die Rillentiefe.

Die Fig. 1f zeigt in Frontalansicht einen Sektor eines Wellenrohres mit erfindungsgemäßer innerer Auskleidungsschicht welche, radial in die inneren ringförmigen Rillen abstehende, Borsten aufweist wobei deren Länge kleiner als die Rillentiefe ist

Die Fig. 1g zeigt in Frontalansicht einen Sektor eines Wellenrohres mit erfindungsgemäßer innerer Auskleidungsschicht welche, radial zur Längsachse des Wellenrohres abstehende, Borsten oder Lamellen aufweist.

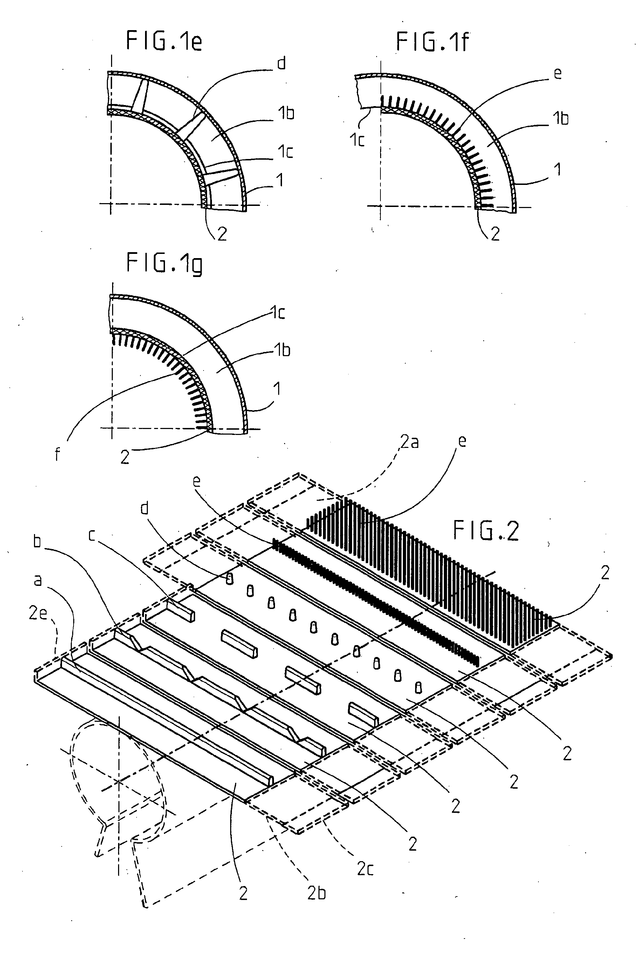

La Fig. 2 zeigt in perspektivischer Darstellung unterschiedliche Streifenbereiche einer erfindungsgemäßen inneren Auskleidungsschicht in eben ausgebreiteter Position, wobei diese Bereiche mit Vorsprüngen unterschiedlicher Formen und Anordnungen ausgestattet sind welche bei, in das Wellenrohr eingelegter, Position geeignet sind in die ringförmigen inneren Rillen des Wellenrohres einzudringen; mit stärkeren strichlierten Linien sind die Längssaume angedeutet während mit feineren strichlierten Linien die Form angedeutet ist welche die innere Auskleidungsschicht im Inneren des Wellenrohres einnehmen würde.

Die Fig. 3 zeigt Schnittdarstellungen gemäß einem Längsschnitt durch eine innere erfindungsgemäße Auskleidungsschicht welche mit quer verlaufenden, unterschiedlich positionierten, elastischen Drähten ausgestattet ist.

Die Fig. 4 zeigt den Längsschnitt durch einen Teil eines Wellenrohres mit erfindungsgemäßer innerer Auskleidungsschicht welche an den inneren Ringflächen des Wellenrohres verklebt ist.

Die Fig. 4a zeigt den Längsschnitt durch einen Teil eines Wellenrohres mit erfindungsgemäßer innerer Auskleidungsschicht welche rippenartige oder lamellenartige Vorsprünge aufweist welche weniger als die Tiefe der ringförmigen inneren Rillen des Wellenrohres vorstehen.

Die Fig. 4b zeigt den Längsschnitt durch einen Teil eines Wellenrohres mit erfindungsgemäßer innerer Auskleidungsschicht deren fingerförmigen Vorsprünge eine der Tiefe der ringförmigen inneren Rillen des Wellenrohres entsprechende Länge aufweisen.

Die Fig. 4c zeigt den Längsschnitt durch einen Teil eines Wellenrohres mit erfindungsgemäßer innerer Auskleidungsschicht deren fingerförmige Vorsprünge länger als die Tiefe der ringförmigen inneren Rillen des Wellenrohres sind.

Die Fig. 4d zeigt den Längsschnitt durch einen Teil eines Wellenrohres mit erfindungsgemäßer innerer Auskleidungsschicht welche an den Innenflächen des Wellenrohres verklebt ist und mit quer zur Längsachse angeordneten Borsten oder Lamellen ausgestattet ist welche sich in Richtung zu dieser Achse erstrecken.

Die Fig. 4e zeigt den Längsschnitt durch einen Teil eines Wellenrohres mit erfindungsgemäßer innerer Auskleidungsschicht welche gewellte Form mit gleicher Teilung wie jene des Wellenrohres hat.

Die Fig. 4f zeigt den Längsschnitt durch einen Teil eines Wellenrohres mit erfindungsgemäßer innerer Auskleidungsschicht welche mit, in die ringförmigen inneren Rillen des Wellenrohres abstehenden, Borsten versehen ist wobei diese länger als die Tiefe der Rillen sind.

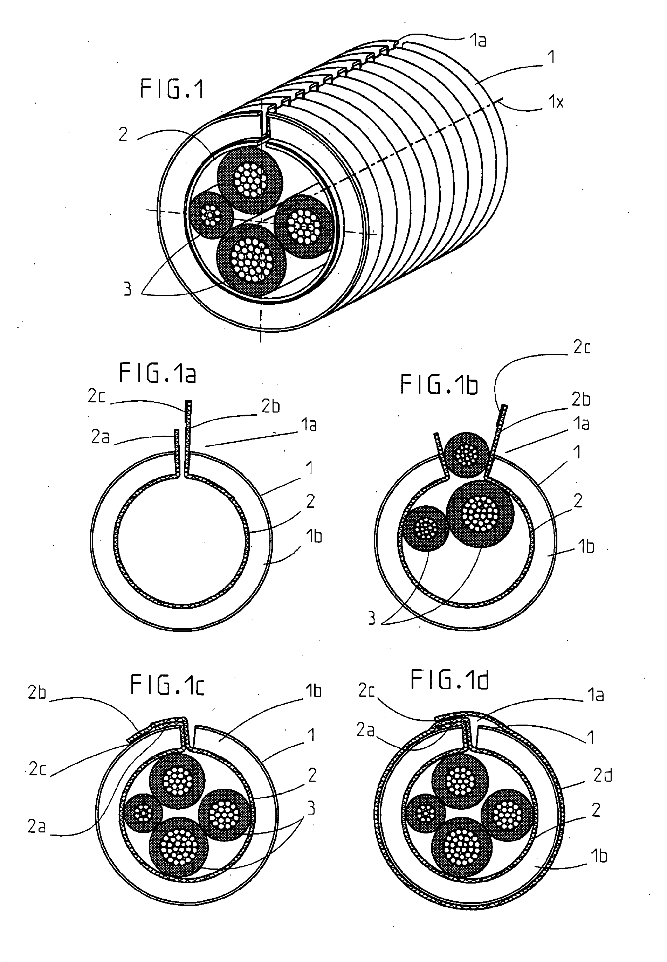

In ein Wellenrohr 1 welches einen Längsschlitz 1a und innere ringförmige Flächen 1c die mit inneren ringförmigen Rillen 1b wechseln aufweist, wird eine innere Auskleidungsschicht 2, zwecks Verhinderung eines direkten Kontaktes zwischen der Ummantelung der Kabel 3 und den Innenflächen 1c des Wellenrohres 1, eingesetzt um dadurch einem gegenseitigen Scheuern zwischen der isolierenden Ummantelung der Kabel 3 und den Innenflächen 1c des Rohres 1 vorzubeugen. Die innere Auskleidungsschicht kann erfindungsgemäß unterschiedliche Struktur, wie die eines kompakten, eines aufgeschäumten, eines perforierten Laminates oder eine gitterartigen, textilartige oder filzartige Struktur aufweisen. Vorzugsweise erstreckt sich die innere Auskleidungsschicht 2, vor dem Einsetzen in das Innere des Wellenrohres 1 in einer einzigen Ebene mit, dem Innendurchmesser des Wellenrohres 1 entsprechender, Breite, in diesem Fall wird sie die, in Fig. 1 gezeigte, Position einnehmen. Gemäß einer Weiterentwicklung kann die innere Auskleidungsschicht 2 an einem oder an beiden ihrer Längsränder Saume 2a, 2b aufweisen welche, nach dem Einsetzen in das Rohr 1, durch den Längsschnitt 1a (Fig. 1a) nach außen ragen um so das Einführen der Kabel 3 (Fig. 1b) zu erleichtern und um anschließend den Längsschlitz 1a, durch Umbiegen beider Saume 2a, 2b auf die gleiche Seite anliegend an die Außenfläche des Wellenrohres 1 und durch Verkleben des überdeckenden breiteren Saumes 2b mittels selbstklebendem Bereich 2c am Wellenrohr 1 (Fig. 1c), zu verschließen. Es ist weiters denkbar, dass einer der Saume etwas breiter als der Außendurchmesser des Wellenrohres 1 ist, so dass dieser das Wellenrohr außen vollständig abdecken kann um auf sich selbst verklebt 2c werden zu können, wodurch ein doppelter Verschluss des Längsschlitzes 1a und, bei Einsatz von undurchlässigem Werkstoff, eine dichte Versiegelung erreicht wird. Gemäß einer Weiterentwicklung des Erfindungsgedankens können der Saum oder die Saume 2e auch eine Breite aufweisen welche ungefähr der Stärke der Wand des Wellenrohres 1 entsprechen um so den Bereich des Längsschlitzes 1a abzudecken ohne darüber hinaus vorzustehen.

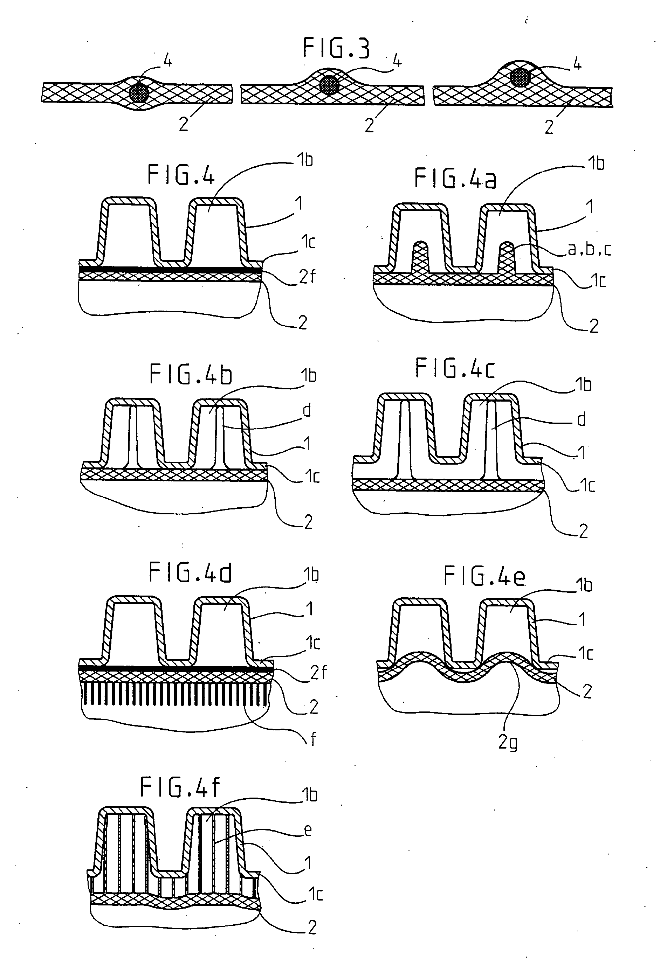

Um ein gleichmäßiges und gutes Anschmiegen der gesamten inneren Auskleidungsschicht 2 an die Innenflächen des Wellenrohres 1 zu erreichen, verfügt die Auskleidungsschicht 2 vorteilhafterweise selbst über die nötige Elastizität, so dass sie sich, infolge des Einführens in das Innere des Wellenrohres 1, an dessen Innenflächen anlegt; dieser Effekt kann erhöht werden indem an der Auskleidungsschicht 2 oder innerhalb dieser, elastische quer zur Längsrichtung angeordnete Drähte oder Streifen 4 vorgesehen sind (Fig. 3). Diese Lösung ist besonders für innere Auskleidungsschichten 2 geeignet welche eine textile, eine filzartige oder eine andere eher dünnwandige Struktur aufweisen. Besagte Drähte oder Streifen 4 können in die Struktur der Auskleidungsschicht 2 eingearbeitet sein (Fig. 3) wodurch einseitige oder beidseitige Querschnittsverdickungen entstehen welche, wenn sie der einfachen oder einer mehrfachen Teilung der Wellenanordnung des Rohres entsprechen, gleichzeitig die Auskleidungsschicht 2 gegen ein Ausziehen oder Verschieben gemäß der Längsachse 1x des Wellenrohres 1 sichert.

Erfindungsgemäß können, um ein Verschiebungen der inneren Auskleidungsschicht 2 gemäß der Achse 1x des Wellenrohres zu verhindern, eine oder mehrere Klebebereiche 2f vorgesehen sein, oder es können an der Schicht 2 selbst, in Querrichtung angeordnete und gegen die Innenflächen des Wellenrohres 1 vorstehende, durchgehende Rippen oder Lamellen b, zueinander beabstandete Rippen oder Lamellen c, fingerförmige Vorsprünge d, Borsten e in, der einfachen oder einer mehrfachen Teilung der Wellenanordnung des Wellenrohres entsprechend, beabstandeten Reihen, angeordnet sein oder auch Borsten e welche gleichmäßig die gesamte Oberfläche besetzen oder Kombinationen zwischen den genannten abstehenden Elementen, beispielsweise von fingerartigen Vorsprüngen d mit Borsten e, vorgesehen sein.

Das Scheuern zwischen der isolierenden Ummantelung der Kabel 3 und den inneren Flächen, bzw. Kanten, des Wellenrohres 1 wird erfindungsgemäß entweder durch die Elastizität und die Weichheit der zwischenliegenden inneren Auskleidungsschicht 2, oder durch die elastische Einlagerung der inneren Auskleidungsschicht im Wellenrohr 1, oder durch die elastische und dämpfende Wirkung von Borsten f oder anderer, gegen die Achse 1x des Wellenrohres 1 abstehender, Elemente verhindert.

Die elastische Einlagerung der Auskleidungsschicht 2 im Wellenrohr 1 wird erreicht wenn die abstehenden Elemente a, b, c, d, e welche in die inneren ringförmigen Rillen 1b des Wellenrohres 1 ragen, länger als die Tiefe dieser Rillen sind, wodurch die Auskleidungsschicht 2 von den ringförmigen Innenflächen 1c des Wellenrohres beabstandet verläuft. Eine besondere elastische Einlagerung wird dadurch erzielt dass Borsten e oder gleichmäßig über die gesamte Fläche der Auskleidungsschicht 2 verteilte Lamellen vorgesehen sind welche gegen die Innenflächen des Wellenrohres 1 (Fig. 4) abstehen, in diesem Fall werden die Borsten oder Lamellen im Bereich der Flächen 1c des Wellenrohres verbogen oder seitlich abgebogen während jene im Bereich der Rillen 1b in diese eindringen und eventuell den Grund der Rillen 1b berühren, wodurch erreicht wird, dass die Auskleidungsschicht 2 leicht gewellt verläuft.

Gemäß einer weiteren erfindungsgemäßen Ausgestaltung ist es auch möglich die innere Auskleidungsschicht 2 gegen ein Verschieben gemäß der Achse 1x des Wellenrohres 1 zu sichern indem diese Schicht mit einer Wellung 2g (Fig. 4e) versehen ist welche weniger ausgeprägt als jene des Wellenrohres 1 ist aber der einfachen oder mehrfachen Teilung der Wellung dieses Rohres entspricht; natürlich kann auch diese gewellte Auskleidungsschicht 2 zusätzlich mit verschiedenartigen Vorsprüngen a, b, c, d, e versehen sein welche gegen die Innenflächen des Wellenrohres 1 und/oder gegen dessen Längsachse 1x abstehen.

Vorteilhafterweise sind die innere Auskleidungsschicht 2 und deren seitlichen Längssaume 2a, 2b, 2d, 2e aus dem selben Werkstoff hergestellt, wobei eventuell die Auskleidungsschicht 2 eine unterschiedliche Struktur und/oder Stärke bezüglich jener der Längssaume aufweist. Die seitlichen Längssaume 2a, 2b, 2d, 2e können sich, zusammen mit der inneren Auskleidungsschicht 2, in einer selben Ebene erstrecken, sie können aber auch in Bezug zur Auskleidungsschicht 2 in einer zu dieser, z.B. um 90°, angewinkelten Ebene verlaufen. Auch die Vorsprünge a, b, c, d, e, f können aus dem selben Werkstoff wie jener der Auskleidungsschicht 2 sein, es wird jedoch nicht ausgeschlossen, dass insbesondere die Borsten e, f oder auch andere Vorsprünge aus anderem Werkstoff sind und an der Auskleidungsschicht 2 angebracht oder zusammen mit dieser koextrudiert werden. Die Teile welche mit selbstklebenden Klebstoff versehen sind, sind vorzugsweise durch ein silikoniertes Papier oder dergleichen abgedeckt. Die Erfindung schließt nicht aus, dass an Stelle der selbstklebenden und/oder der klebenden Bereiche 2c, an den Längssaumen der inneren Auskleidungsschicht 2, eventuell auch im Bereich welcher den Saumen 2e entspricht, ein Klettverschluss vorgesehen ist.

## Patentansprüche

1. Scheuerschutz für, in Wellenrohre mit Längsschlitz (1a) verlegte, Kabel (1), **dadurch gekennzeichnet, dass** zwischen den Innenflächen des Wellenrohres (1) und den Kabeln (3) welche nachträglich durch den Längsschlitz (1a) in das Wellenrohr (1) eingesetzt werden, eine innere Auskleidungsschicht (2) eingelegt ist welche sich an die inneren Ringflächen (1c) des Wellenrohres anschmiegt, wobei die Längsränder dieser inneren Auskleidungsschicht (2) dem Längsschlitz (1a) des Wellenrohres entsprechend verlaufen und dass das gleichmäßige Anliegen der inneren Auskleidungsschicht (2) an den inneren Ringflächen (1c) des Wellenrohres durch die Elastizität der Auskleidungsschicht infolge seiner Biegung gemäß der Längsachse (1x) des Wellenrohres (1) und/oder durch mindestens einem Klebebereich (2f), gesichert wird.

2. Scheuerschutz für Kabel gemäß Anspruch 1, **dadurch gekennzeichnet, dass** die innere Auskleidungsschicht (2) die Struktur eines kompakten, eines aufgeschäumten, eines perforierten Laminates oder eine textile oder filzartige Struktur aufweist und dass die Elastizität der Auskleidungsschicht (2) mittels quer verlaufender Drähte oder Streifen (4) welche in die Auskleidungsschicht (2) eingearbeitet oder an dieser angebracht sind erhöht wird, wodurch an den, diesen Drähten oder Streifen entsprechenden, Bereichen Querschnittsverdickungen an einer oder an beiden Oberflächen der Auskleidungsschicht (2) gebildet werden welche um eine einzelne Teilung oder eine mehrfache Teilung der Wellung des Wellenrohres (1) beabstandet sind.

3. Scheuerschutz für Kabel gemäß Anspruch 1, **dadurch gekennzeichnet, dass** die innere Auskleidungsschicht (2) aus weichem Werkstoff hergestellt ist oder durch ihre Struktur sich weich präsentiert.

4. Scheuerschutz für Kabel gemäß Anspruch 1, **dadurch gekennzeichnet, dass** das Festhalten der im Wellenrohr (1) eingelegten inneren Auskleidungsschicht (2) gegen ein Verschieben oder ein Herausziehen in Richtung der Achse (1x) des Wellenrohres (1) durch die Wirkung von Vorsprüngen (a, b, c, d, e) welche gemäß quer verlaufender Linien an der Auskleidungsschicht (2) vorgesehen sind und gegen die ringförmigen inneren Rillen (1c) des Wellenrohres ausgerichtet sind, erreicht wird und dass diese Vorsprünge in Längsrichtung der Auskleidungsschicht (2) unter sich um eine einzelne oder eine mehrfache Teilung der Wellung des Wellenrohres (1) beabstandet sind.

5. Scheuerschutz für Kabel gemäß Anspruch 1, **dadurch gekennzeichnet, dass** von der inneren Auskleidungsschicht (2) gegen die Innenflächen des Wellenrohres Borsten (e) oder andere drahtförmige oder lamellenförmige Elemente abstehen welche im Bereich der inneren ringförmigen Rillen (1b) frei in diese hineinragen während sie im Bereich der inneren Ringflächen (1c) verbogen und/oder seitlich in Richtung Rillen abgebogen werden wodurch die Auskleidungsschicht (2) in diesen letzten Bereichen nicht direkt an den inneren Ringflächen anliegt.

6. Scheuerschutz für Kabel gemäß Anspruch 1, **dadurch gekennzeichnet, dass** die Vorsprünge (a, b, c, d, e) welche von der inneren Auskleidungsschicht (2) in die inneren ringförmigen Rillen (1b) des Wellenrohres (1) ragen länger als die Tiefe der besagten Rillen (1b) sind wodurch die Auskleidungsschicht von den inneren Ringflächen (1c) des Wellenrohres (1) distanziert eingelagert ist.

7. Scheuerschutz für Kabel gemäß Anspruch 1, **dadurch gekennzeichnet, dass** die innere Auskleidungsschicht (2) mit Borsten (f) oder mit anderen drahtähnlichen, fingerförmigen oder lamellenförmigen Vorsprüngen ausgestattet ist welche in Richtung zur Längsachse (1x) des Wellenrohres abragen.

8. Scheuerschutz für Kabel gemäß Anspruch 1, **dadurch gekennzeichnet, dass** die innere Auskleidungsschicht (2) quer angeordnete Ausbuchtungen oder Wellen (2g) aufweist welche zueinander gemäß der einfachen oder mehrfachen Teilung der Wellung des Wellenrohres (1) beabstandet sind.

9. Scheuerschutz für Kabel gemäß Anspruch 1, **dadurch gekennzeichnet, dass** die innere Auskleidungsschicht (2) entlang eines oder beider Längssaume (2a, 2b, 2d, 2e) welche an dieser angebracht sind oder welche aus dem selben Werkstoff angeformt sind, eventuell andere Stärke und Struktur aufweisen und ungefähr der Wandstärke des Wellenrohres (1) entsprechende Breite, größere Breite als diese Wandstärke oder größere Breite als der Umfang des Wellenrohres (1), aufweist und dass in den zwei letzteren Fällen einer der beiden Saume (2b, 2d) derartige Breite hat, dass er den anderen Saum (2a, 2e) überdeckt und am Wellenrohr (1), bzw. sich selbst überlappend (2d) durch Verkleben (2c) oder durch Klettverschluss gehalten wird.

10. Scheuerschutz für Kabel gemäß Anspruch 1, **dadurch gekennzeichnet, dass** die Längssaume (2a, 2b, 2d, 2e) welche von den Längsrändern der inneren Auskleidungsschicht (2) abstehen mit dieser in einer selben Ebene liegen oder in einer Ebene liegen welche zu jener der Auskleidungsschicht (2) einen Winkel von ungefähr 90° bildet.
